(19) Europäisches Patentamt
European Patent Office
Office européen des brevets

(11) **EP 2 918 009 B1**

(12) **EUROPÄISCHE PATENTSCHRIFT**

(45) Veröffentlichungstag und Bekanntmachung des Hinweises auf die Patenterteilung:
**21.04.2021 Patentblatt 2021/16**

(21) Anmeldenummer: **13788755.0**

(22) Anmeldetag: **07.11.2013**

(51) Int Cl.:
**F04B 15/06** *(2006.01)*  **H02P 29/50** *(2016.01)*
**H02P 5/747** *(2006.01)*

(86) Internationale Anmeldenummer:
**PCT/EP2013/073276**

(87) Internationale Veröffentlichungsnummer:
**WO 2014/072409 (15.05.2014 Gazette 2014/20)**

(54) **SYSTEM MIT EINEM ERSTEN ELEKTROMOTOR UND EINEM ZWEITEN ELEKTROMOTOR ZUM ANTREIBEN EINES STRANGS**

SYSTEM WITH A FIRST ELECTRIC MOTOR AND A SECOND ELECTRIC MOTOR FOR DRIVING A LINE SECTION

SYSTÈME COMPORTANT UN PREMIER MOTEUR ÉLECTRIQUE ET UN DEUXIÈME MOTEUR ÉLECTRIQUE POUR ENTRAÎNER UN ENSEMBLE D'ÉLÉMENTS ROTATIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2012 EP 12191670**

(43) Veröffentlichungstag der Anmeldung:
**16.09.2015 Patentblatt 2015/38**

(73) Patentinhaber: **ABB Schweiz AG**
**5400 Baden (CH)**

(72) Erfinder:
• **PIEDER, Joerg**
 **CH-7013 Domat/Ems (CH)**
• **BELLI, Paolo**
 **I-20162 Mailand (IT)**

(74) Vertreter: **Vossius & Partner**
**Patentanwälte Rechtsanwälte mbB**
**Siebertstrasse 3**
**81675 München (DE)**

(56) Entgegenhaltungen:
**EP-A2- 2 099 124      EP-A2- 2 099 124**

• **Siemens AG: "Siemens liefert vier seiner leistungsstärksten Stromrichter-Giessharztransformatoren für das Hamburger Steinkohlekraftwerk Moorburg", , 25. Juni 2010 (2010-06-25), XP007921874, Gefunden im Internet: URL:http://www.siemens.com/press/de/presse bilder/?press=/de/pressebilder/2010/power_ transmission/ept201006093-01.htm [gefunden am 2013-05-10]**
• **VOLKER HÜTTEN ET AL: "TORSIONAL INTERHARMONIC INTERACTION STUDY OF 75 MW DIRECT-DRIVEN VSDS MOTOR COMPRESSOR TRAINS FOR LNG DUTY", PROCEEDINGS OF THE THIRTY-SEVENTH TURBO MACHINERY SYPOSIUM 2008,, 1. Januar 2008 (2008-01-01), Seiten 57-66, XP007920625,**
• **SCHRAMM S ET AL: "Damping torsional interharmonic effects of large drives", IEEE 6TH INTERNATIONAL POWER ELECTRONICS AND MOTION CONTROL CONFERENCE, 2009 : IPEMC '09 ; WUHAN, CHINA, 17 - 20 MAY 2009, IEEE, PISCATAWAY, NJ, USA, 17. Mai 2009 (2009-05-17), Seiten 484-490, XP031535158, ISBN: 978-1-4244-3556-2**

**Beschreibung**

Die vorliegende Erfindung betrifft ein System gemäss dem Oberbegriff von Anspruch 1.

Die US 2010/0135825 A1 offenbart ein System mit zwei Elektromotoren, das für die Verflüssigung von Gas, insbesondere Erdgas verwendet wird.

Die EP 2 099 124 A2 offenbart einen Antrieb mit durch Stromzwischenkreisumrichter gespeisten Drehstromsynchronmaschinen für einen Nennleistung von 10 MW oder darüber. Rotoren zweier Drehstrom-Synchronmaschinen sind mechanisch miteinander gekoppelt.

Das bekannte System weist zwei Elektromotoren auf, welche über eine gemeinsame Welle mechanisch miteinander verbunden sind. Auf der Welle ist als Last ein Kompressor beziehungsweise ein Kompressorsystem angeordnet. Die rotierenden Komponenten, das heisst die Welle, die Rotoren des Kompressors, Kupplungen zwischen Motorwellen und der Kompressorwelle wie auch die Rotoren der Motoren, werden als Strang bezeichnet.

Es ist allgemein bekannt, dass derartige Systeme Eigenschwingungen aufweisen. Zur Analyse und auch zur Dokumentation derartiger Eigenschwingungen werden sogenannte Campbell-Diagramme verwendet.

Nachteilig an einem derartigen System erweist sich, dass die Elektromotoren Eigenschwingungen des Strangs anregen können. Diese Eigenschwingungen müssen folglich gedämpft beziehungsweise ihre Anregung verhindert werden, da die Eigenschwingungen ansonsten das System beschädigen oder sogar zerstören könnten.

Aufgabe der vorliegenden Erfindung ist es, ein System anzugeben, bei welchem das Problem der Anregung bestimmter Eigenfrequenzen der Last gelöst ist.

Erfindungsgemäss wird dieses Problem durch den Gegenstand des Anspruchs 1 gelöst. Bevorzugte Ausführ-rungsformen sind in den abhängigen Patentansprüchen angegeben.

Dank des erfindungsgemässen Systems kann zumindest eine Eigenschwingung des Strangs gezielt gedämpft werden. Falls die Dämpfung optimal ist, kann die Eigenschwingung sogar ausgelöscht werden. Folglich braucht das System keine weiteren Komponenten oder Regelungen, welche die Anregung dieser Eigenschwingung verhindert oder kontrolliert. Folglich kann das System kostengünstiger gefertigt werden. Der Betrieb des Systems ist sicherer, da die Eigenschwingung konstruktionsbedingt nicht beziehungsweise nur gedämpft auftreten kann.

In einer bevorzugten Ausführungsform des System sind der erste Antrieb wie auch der zweite Antrieb als Stromzwischenkreisumrichter ausgebildet . Die Ausführung der Antriebe als Stromzwischenkreisumrichter erlaubt insbesondere einen kostengünstigen Betrieb des Systems.

In einer bevorzugen, mit den anderen bevorzugten Ausführungsformen kombinierbaren Ausführungsform des System weist der erste Antrieb einen ersten Umrichter und der zweite Antrieb einen zweiten Umrichter auf, wobei der erste Umrichter und der zweite Umrichter auf der Seite des Versorgungsnetzes und auf der Seite des ersten Motors beziehungsweise des zweiten Motors jeweils als fremdgeführter Stromrichter ausgeführt ist.

Der zweite Umrichter kann um einen Phasenverschiebungswinkel $\Delta ph_N$ phasenverschoben gegenüber dem ersten Umrichter betrieben werden. .

Dies erlaubt, die Netzrückwirkung des Systems zu optimieren, insbesondere kann die Einkopplung unerwünschter Frequenzen in das Versorgungsetz verhindert werden.

Beispielsweise kann der zweite Antrieb einen zweiten Transformator aufweisen, mittels welchem die Phasen-verschiebung um den Phasenverschiebungswinkel $\Delta ph_N$ realisiert wird. In einer bevorzugen, mit den anderen bevorzugten Ausführungsformen kombinierbaren Ausführungsform des System sind der erste Umrichter und der zweite Umrichter jeweils auf der Seite des Versorgungsnetzes als auch auf der Seite des ersten Elektromotors beziehungsweise des zweiten Elektromotors als 12-Puls-Stromrichter ausgeführt ist. Die Gemäss einer weiteren, bevorzugten Ausführungsform der Erfindung, ist jeweils ein netzseitiger Stromrichter des ersten Umrichters und des zweiten Umrichters (49) als phasenanschnittgesteuerter, fremdkommutierter Thyristorstromrichter ausgeführt ist. Gemäss einer weiteren, bevorzugten Ausführungsform der Erfindung ist jeweils ein lastseitiger Stromrichter des ersten Umrichters und des zweiten Umrichters als phasenanschnittgesteuerter, fremdkommutierter Thyristorstromrichter ausgeführt.

In einer bevorzugen, mit den anderen bevorzugten Ausführungsformen kombinierbaren Ausführungsform des System, ist der zweite Elektromotor um einen relativen Motorwinkel $\Delta ph_M$ radial verdreht gegenüber dem ersten Elektromotor angeordnet, wobei der relative Motorwinkel zumindest näherungsweise

$$\Delta ph_M = \frac{\Delta ph_N}{360\deg}\frac{1}{f_N}\frac{N_N}{1/f_M - 1/f_N}(360°/N_M)$$

ist, wobei $f_N$ die Frequenz des Versorgungsnetzes und $f_M$ die Frequenz der lastseitigen Stromrichter ist, $N_N$ die Pulszahl der netzseitigen Stromrichter und $N_M$ die Pulszahl der lastseitigen Stromrichter (62) ist.

Insbesondre falls $\Delta ph_N$ von Null verschieden ist, kann dank dieser Formel selbst beim Betrieb der beiden netzseitigen Stromrichter mit einer Phasenverschiebung von $\Delta ph_N$ eine Dämpfung einer Eigenschwingung des Strangs oder sogar die Auslöschung einer Eigenschwingung erzielt werden. Folglich kann das System ohne spezielle Schutzkonzepte oder Systeme gegen eine bestimmte Eigenschwingung des Strangs konzipiert werden wodurch das System insgesamt kostengünstiger gefertigt und sicherer betrieben werden kann.

In einer bevorzugen, mit den anderen bevorzugten Ausführungsformen kombinierbaren Ausführungsform des System weist der Strang eine Last auf, welche bevorzugt ein Kompressorsystem ist. Ein derartiges System weist bevorzugt eine Leistung der beiden Elektromotoren von mindestens 60 MW auf.

In einer bevorzugen, mit den anderen bevorzugten Ausführungsformen kombinierbaren Ausführungsform des System weist der erste Elektromotor einen ersten Rotor und einen ersten Stator auf, und der zweite Elektromotor weist einen zweiten Rotor und einen zweiten Stator auf, wobei der zweite Rotor nicht auf den ersten Rotor radial ausgerichtet ist und/oder der zweite Stator nicht auf den ersten Stator radial ausgerichtet ist.

Weitere bevorzugte Ausführungsformen der Erfindung sind in den weiteren abhängigen Patentansprüche angegeben und ergeben sich aus der Beschreibung bevorzugten Ausführungsformen.

Bevorzugte Ausführungsformen der vorliegenden Erfindung werden in exemplarischer Weise mit Bezug auf die angehängten Zeichnungen beschrieben. Diese bevorzugten Ausführungsformen der Erfindung stellen nicht einschränkende Beispiele der Erfindung dar.

Die Zeichnung zeigt rein schematisch

Fig. 1 in Seitenansicht ein mechanisches System mit einem ersten Motor und einem zweiten Motor, welche über eine gemeinsame Welle miteinander mechanisch gekoppelt sind, wobei über die Welle eine Last angetrieben wird;

Fig. 2 das mechanische System gemäss Fig. 1 in Richtung der Längsachse, wobei verschiedene Winkel der einzelnen Komponenten zueinander eingezeichnet sind und der übersichtlichkeitshalber die Last nicht dargestellt ist;

Fig. 3 eine beispielshafte Anordnung eins elektrischen Systems zum Antreiben des ersten und zweiten Motors;

Fig. 4 eine beispielshafte Ausführungsform eines Umrichters für das elektrische System;

Fig. 5 ein typisches Campell-Diagramm, in welchem Frequenzen der Pendelmomente eines Strangs des mechanischen Systems, gebildet aus den Rotoren der Motoren, der Welle und der Last, in Abhängigkeit einer Umdrehungsgeschwindigkeit des Strangs sowie torsionale Eigenfrequenzen des Strangs aufgetragen sind;

Fig. 6 zweigt die Periodenlänge des Faltungsproduktes der 12-fachen Netzfrequenz $f_N$ mit der zwölffachen Motorfrequenz $f_M$, wobei in FIG. 6 die Netzfrequenz mit fN, die Motorfrequenz mit fM und das Faltungsprodukt mit |12 fN - 12 fM| bezeichnet ist; und

Fig. 7 im Vergleich zu Fig. 6 die zwölffache Netzfrequenz um 30° phasenverschoben gegenüber der zwölffachen Netzfrequenz aus Fig. 6.

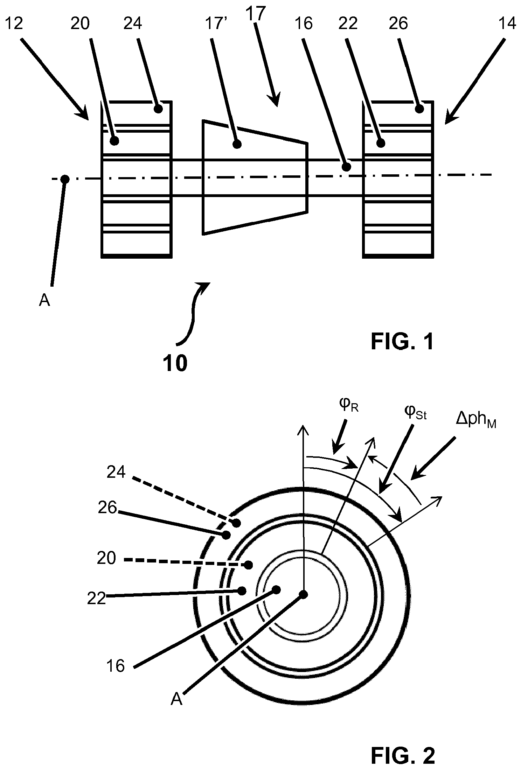

FIG. 1 und 2 zeigt ein erfindungsgemässes mechanisches System 10 mit einem ersten Elektromotor 12, einem zweiten Elektromotor 14 und einer gemeinsamen Welle 16, über welche der erste Elektromotor 12 und der zweite Elektromotor 14 miteinander mechanisch gekoppelt sind. Der Einfachheit halber werden die Elektromotoren kurz als Motoren bezeichnet. Auf der Welle 16 ist eine Last 17' angebracht. Derartige mechanische Systeme 10 werden beispielsweise für eine Gasverflüssigungsanlage verwendet, wobei in diesem Fall die Last 17' ein Kompressor beziehungsweise ein Kompressorsystem bestehend aus mehreren Kompressoren zum Verflüssigen von Gas, insbesondere Erdgas ist. Die rotierenden Komponenten des mechanischen Systems 10 werden als Strang 17 bezeichnet. Dies sind insbesondere ein erster Rotor 20 des ersten Motors 12, ein zweiter Rotor 26 des zweiten Motors 22, die Welle 16 und die Last 17' sowie eventueller weiterer Komponenten wie zum Beispiel Kupplungen zwischen dem jeweiligen Rotor 20, 26 und der Welle 16. Zum Antreiben der Last 17' im Falle einer Erdgasverflüssigungsanlage werden heutzutage typischerweise Antriebsleistungen zwischen 60 MW (Megawatt) und 120 MW benötigt. Jedoch sind bereits Anlagen mit einer grösseren Antriebsleistung in Planung. Beispielsweise kann diese Antriebsleistung von je zur Hälfte von jedem der beiden Motoren 12, 14 aufgebracht werden, sodass jeder der beiden Motoren 12, 14 eine Leistung von 30MW bis 60 MW an die Welle 16 abgeben kann. Alternativ kann einer der beiden Motoren 12, 14 zum Abgeben einer grösseren Antriebsleistung als der andere Motor 12, 14 dimensioniert sein, beispielsweise könnte der erste Motor 12 zum Abgeben einer Antriebsleistung von zwischen 70 MW und 100 MW und der zweite Motor 14 für eine Antriebsleistung von bis zu 20 MW ausgelegt sein.

Der erste Motor 12 wie auch der zweite Motor 14 sind dazu bestimmt, die Welle 16 wie auch die Last 17' anzutreiben. Die Welle 16 zusammen mit der Last 17' bildet - wie vorstehend bereits erwähnt - den Strang 17. Hierzu ist der erste Rotor 20 des ersten Motors 12 mechanisch mit der Welle 16 gekoppelt. Ebenso ist der zweite Rotor 22 mit der Welle 16 gekoppelt. Bevorzug ist der erste Rotor 20 wie auch der zweite Rotor 22 direkt mit der Welle 16 verbunden beziehungsweise an dieser ausgebildet. Alternativ könnte einer oder auch beide Rotoren 20, 22 über ein in der Zeichnung nicht gezeigtes Getriebe mit der Welle 16 gekoppelt sein.

Um den ersten Rotor 20 ist ein erster Stator 24 des ersten Motors 12 und um den zweiten Rotor 22 ein zweiter Stator 26 des zweiten Motors 14 angeordnet. Wie in FIG. 1 gezeigt, ist es bevorzugt, dass der erste Motor 12 wie auch der zweite Motor 14 an jeweils gegenüberliegenden Endbereichen der Welle 16 angeordnet sind. Andere Anordnungen sind jedoch ebenfalls möglich.

Im ersten Ausführungsbeispiel der Erfindung ist der erste Motor 12 wie auch der zweite Motor 14 als Synchronmaschine (in FIG: 3 und 4 mit SM bezeichnet) ausgeführt. Jedoch kann die Erfindung prinzipiell auch mit einer Asynchronmaschine ausgeführt werden.

Der Strang 17 ist möglichst starr ausgebildet, kann jedoch durch verschiedene, bestimmte Eigenfrequenzen zu Eigenschwingungen angeregt werden, insbesondere zu Torsionsschwingungen. Bei der Torsionsschwingung erfolgt eine Schwingung um den rotatorischen Freiheitsgrad des Strangs 17, im vorliegenden Fall, um die Längsachse A des Strangs 17. Beim ersten Eigenmod der Eigenschwingung zur ersten Eigenfrequenz verdreht sich lediglich das eine Ende des Strangs 17 beziehungsweise der Welle 16 gegenüber dem anderen Ende des Strangs 16 beziehungsweise der Welle 16. Beim zweiten Eigenmod der Eigenschwingung zur zweiten Eigenfrequenz schwingen beide Enden des Strangs 17 synchron zueinander, jedoch schwingt der mittlere Abschnitt des Strangs 17 in entgegengesetzter Umfangrichtung bezüglich der Schwingung der beiden Enden. Die Eigenschwingungen des Strangs 17 können insbesondere auch auftreten, während sich der Strang 17 dreht, das heisst, dass die Eigenschwingung einer konstanten Drehbewegung des Strangs 17 überlagert ist.

Der erste Stator 24 wird im Folgenden ohne Beschränkung der Allgemeinheit als ortsfestes Koordinatensystem für die folgenden Betrachtungen der beiden Statoren 24, 26 des ersten und zweiten Motors 12, 14 genommen. Der zweite Stator 26 kann auf der durch die Welle 16 definierten Längsachse A des mechanischen Systems 10 in Umfangrichtung prinzipiell beliebig angeordnet sein. Wie in Fig. 2 gezeigt, ist der Winkel, um welchen der zweite Stator 26 gegenüber dem ersten Stator 24 verdreht angeordnet ist, als Statorwinkel $\varphi_{St}$ bezeichnet. Der Statorwinkel $\varphi_{St}$ kann folglich Null oder verschieden von Null sein. Bei einem Statorwinkel von $\varphi_{St} = 0$ sind die Pole des zweiten Stators 26 in Richtung der Längsachse A deckungsgleich mit den Polen des ersten Stators 24.

Das Koordinatensystem für die rotierenden Komponenten des mechanischen Systems 10, insbesondere für den Strang 17, den ersten Rotor 20 und den zweiten Rotor 22 wird ohne Beschränkung der Allgemeinheit durch den ersten Rotor 20 definiert. Der zweite Rotor 22 kann auf der mechanisch unbelasteten Welle 16, d.h. beispielsweise solange das mechanische System 10 im Stillstand ist und durch den ersten Motor 12, den zweiten Motor 14 wie auch durch die Last 17' kein Drehmoment auf die Welle 16 ausgeübt wird, um einen Winkel verdreht angeordnet sein, welcher im Folgenden als Rotorwinkel $\varphi_R$ bezeichnet wird. Der Rotorwinkel $\varphi_R$ kann folglich Null oder verschieden von Null sein. Bei einem Rotorwinkel von $\varphi_R = 0$ sind die Pole des zweiten Rotors 22 in Richtung der Längsachse A deckungsgleich mit den Polen des ersten Rotors 20. Weiter ist in FIG. 2 der Winkel relative Motorwinkel $\Delta ph_M$ zwischen dem Statorwinkel $\varphi_{St}$ und dem Rotorwinkel $\varphi_R$ eingezeichnet. Unter mechanischer Belastung des Strangs 17 kann sich dieser verdrehe, insbesondre als Funktion der Zeit, da die Welle 16 wie auch die Last 17' nicht vollkommen starr sind. Mechanische Belastungen der Welle 16 werden insbesondere durch die beiden Motoren 12, 14 als auch durch die Last 17' verursacht. Insbesondre können die beiden Motoren 12, 14 torsionale Eigenschwingungen des Strangs 17 anregen.

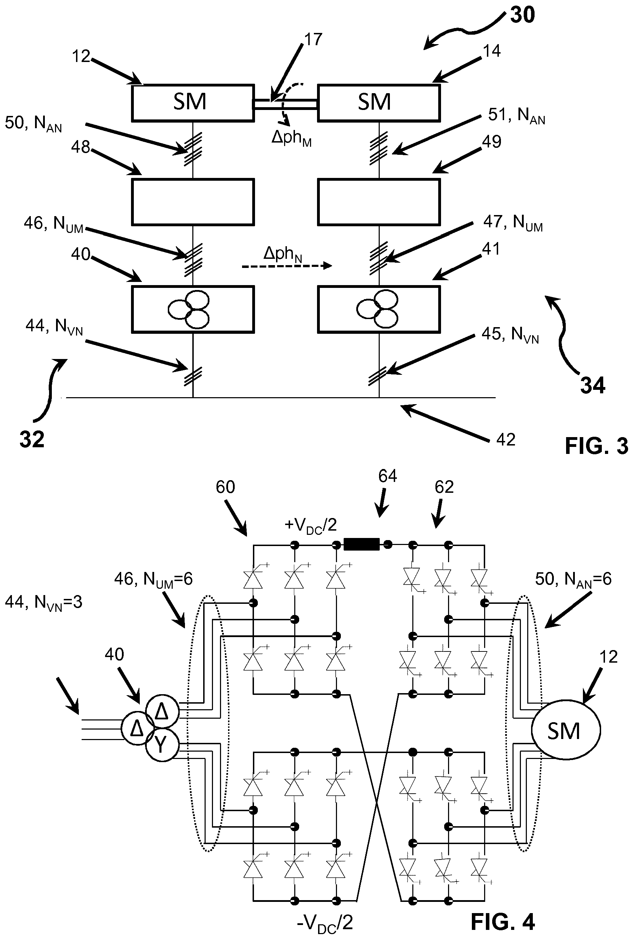

In FIG. 3 ist ein Antriebssystem 30 zum Antreiben des ersten Motors 12 wie auch des zweiten Motors 14 des Systems 10 gezeigt. Der erste Motor 12 wird durch den ersten Antrieb 32 und der zweite Motor 14 durch den zweiten Antrieb 34 getrieben. Die Antriebe 32, 34 sind typische Antriebe, wie sie dem Fachmann für derartige Zwecke bestens bekannt sind.

Der erste Antrieb 32 weist einen ersten Transformator 40 auf, der auf Seite eines Versorgungsnetzes 42 über $N_{VN}$ Phasenleiter 44 mit diesem verbunden ist. Das Versorgungsnetz 42 ist typischerweise 3-phasig ausgebildet, sodass der erste Transformator 40 über drei ($N_{VN}=3$) Phasenleiter 44 mit diesem verbunden ist. Auf der Seite des ersten Motors 12 ist der Transformator 40 über sechs ($N_{UM}=6$) Phasenleiter 46 mit einem ersten Umrichter 48 verbunden. Typischerweise ist die Verbindung zwischen Transformator 40 und dem Umrichter 48 gleich oder ein ganzzahliges Vielfaches von $N_{VN}$. Im vorliegenden Beispiel ist $N_{UM}=6$, wobei die sechs Phasen phasenverschoben zueinander sind.

Der erste Umrichter 48 ist über $N_{AN}$ Phasenleiter 50 mit dem ersten Motor 12 verbunden. Typischerweise werden 3, 6, 12, 18 oder 24 Phasenleiter 50 verwendet. Im vorliegenden Beispiel werden sechs ($N_{AN}=6$) Phasenleiter 50 verwendet.

Der zweite Antrieb 34 ist weitgehend analog zum ersten Antrieb 32 ausgebildet.

Der zweite Antrieb 34 weist einen zweiten Transformator 41 auf, der auf Seite des Versorgungsnetzes 42 über ebenfalls $N_{VN}$ Phasenleiter 45 mit diesem verbunden ist. Auf der Seite des zweiten Motors 14 ist der zweite Transformator 41 über sechs ($N_{UM}=6$) Phasenleiter 47 mit einem zweiten Umrichter 49 verbunden. Typischerweise ist die Verbindung zwischen dem zweiten Transformator 41 und dem zweiten Umrichter 49 gleich oder ein ganzzahliges Vielfaches von $N_{VN}$. Im vorliegenden Beispiel ist $N_{UM}=6$, wobei die sechs Phasen phasenverschoben zueinander sind.

Der zweite Umrichter 49 ist über $N_{AN}$ Phasenleiter 51 mit dem zweiten Motor 14 verbunden. Typischerweise werden 3, 6, 12, 18 oder 24 Phasenleiter 51 verwendet. Im vorliegenden Beispiel werden sechs ($N_{AN}$ =6) Phasenleiter 51 verwendet.

Die sechs Phasen am Ausgang des zweiten Transformators 41 können um einen Phasenverschiebungswinkel $\Delta ph_N$ phasenverschoben zu den sechs Phasen am Ausgang des ersten Transformators 40 sein. Dies kann beispielsweise dazu genutzt werden, um störende Rückwirkungen des Antriebssystems 30 auf das Versorgungsnetz 42 zu verringern. Beispielsweise kann ein Phasenverschiebungswinkel $\Delta ph_N$ von 15° bei dem in FIG. 3 und 4 gezeigten Antriebssystem vorteilhaft sein. Jedoch kann der Phasenverschiebungswinkel auch verschieden von 15° oder auch $\Delta ph_N$ =0° sein.

Der Phasenverschiebungswinkel $\Delta ph_N$ ist folglich ein netzseitiger elektrischer Phasenverschiebungswinkel zwischen dem ersten Umrichter 48 und dem zweiten Umrichter 49.

FIG. 4 zeigt eine Detailansicht der FIG. 3. FIG 4 zeigt drei Phasenleiter 44 ($N_{VN}$=3), über welche der erste Transformator 40 mit dem Versorgungsnetz 42 (siehe Fig. 3) verbunden ist. Wie gezeigt, ist der erste Transformator 40 derart ausgebildet, dass auf der Seite des ersten Umrichters 48 sechs Phasenleiter 46 ($N_{UM}$=6) mit dem ersten Transformator 40 verbunden sind. Die sechs Phasen sind zueinander phasenverschoben, wobei die Phasenverschiebung bei sechs Phasenleitern bevorzugt 60° beträgt. Allgemein soll die Phasenverschiebung zwischen den einzelnen Phasen 360° geteilt durch die Anzahl $N_{UM}$ Phasenleiter 46 betragen, in Formeln ausgedrückt: $360°/N_{UM}$ .Eine 60° Phasenverschiebung kann beispielsweise mittels des 3-phasigen Versorgungsnetzes 42 sowie über Transformatorwicklungen in Delta- bzw. Y-Ausführung erzielt werden. Diese wie auch andere mögliche Ausbildungen sind dem Fachmann bekannt.

Weiter zeigt FIG. 4 einen netzseitigen Stromrichter 60 des ersten Umrichters 48. Der netzseitige Stromrichter 60 ist durch zwei in Serie zueinander geschaltete Sechspuls-Brückengleichrichterschaltungen ausgeführt. Zusammen bilden sie somit eine 12-Puls-Gleichrichterschaltung. Andere Schaltungen sind dem Fachmann bekannt, welche ebenfalls 12-Puls-Gleichrichterschaltungen sind. Im vorliegenden Ausführungsbeispiel sind phasenanschnittgestuererte Thyristoren als Schaltelemente gezeigt. Der netzseitige Stromrichter 60 ist folglich als fremdgeführter Stromrichter 60 ausgebildet. Die Frequenz des netzseitigen Stromrichters 60 ist folglich gleich der Frequenz des Versorgungsnetzes 42 und ist mit $f_N$ bezeichnet. $f_N$ ist folglich typischerweise 50 Hz oder 60 Hz, kann jedoch prinzipiell eine beliebige Frequenz sein. Anstelle der in FIG.3 gezeigten Schaltelemente könnten auch andere Schaltelemente als Thyristoren verwendet werden. Dem Fachmann sind geeignete Stromrichterschaltungen bekannt.

Allgemein gilt, dass die $N_N$-Puls-Gleichrichterschaltung durch Gleichrichtung von $N_N/2$ Phasen erzielt wird, wobei beide Halbwellen der Schwingungen gleichgerichtet werden. Falls nur die positive bzw. nur die negative Halbwellen gelichgerichtet werden, ist die Anzahl der Pulse gleich der Anzahl der zueinander phasenverschobenen Phasen. Im in FIG. 4 gezeigten Beispiel ist $N_N$ =12.

Motorseitig beziehungsweise lastseitig weist der erste Umrichter 48 einen lastseitigen Stromrichter 62 auf. Der lastseitige Stromrichter 62 ist im vorliegenden Beispiel über 6 Phasenleiter 50 ($N_{AM}$=6) mit dem ersten Motor 12 verbunden. Die Phasenleiter 50 können unabhängig voneinander eingeschaltet werden. Hierzu weist der lastseitige Stromrichter 62 wiederum phasenanschnittgestuererte Thyristoren auf und ist wiederum als fremdgeführter Stromrichter ausgeführt. Dem Fachmann sind weitere Möglichkeiten bestens bekannt. Da jede der Phasen entweder an +$V_{DC}$/2 oder -$V_{DC}$/2 beaufschlagt werden kann, wird die Wechselrichterschaltung als 12-Puls-Wechselrichter bezeichnet. Allgemein gilt, dass die Anzahl Pulse $N_M$ des $N_M$-Puls-Wechselrichter wie folgt definiert sind: Anzahl der Phasenleiter $N_{AN}$ *2, wobei die $N_{AN}$ Phasenleiter 50 zumindest zueinander phasenverschoben angesteuert werden können. Im allgemeinsten Fall können die $N_{AN}$ Phasenleiter 50 unabhängig zueinander angesteuert werden. In dem in FIG.3 und 4 gezeigten Ausführungsbeispiel ist $N_M$=12.

Analog zum ersten Antrieb 32 weist der zweite Antrieb 34 einen netzseitigen Stromrichter und einen lastseitigen Stromrichter auf, selche jeweils analog zum netzseitigen Stromrichter und zum lastseitigen Stromrichter des ersten Antriebs 34 ausgebildet sind.

Im vorliegenden Beispiel ist der erste Motor 12 wie auch der zweite Motor 14 mit je 6 Statorwicklungen ausgebildet, die beispielsweise in Sternschaltung betrieben werden. Jede Statorwicklung ist mit einem der Phasenleiter 50 des jeweiligen Antriebs 32, 34 verbunden.

Die beiden lastseitigen Stromrichter 62 dienen dazu, den ersten Motor 12 beziehungsweise den zweiten Motor 14 mit einer variablen Frequenz anzutreiben, sodass der jeweilige Motor 12 bzw. 14 mit einer variablen Umdrehungsgeschwindigkeit dreht. Bei einem 12-Puls-Wechselrichter und einem Stator mit 6 Statorwicklungen dreht der Motor mit der Motorfrequenz $f_{Mot}$ = $f_M$ / $N_{PP}$ wobei $N_{PP}$ die Anzahl der Polpaare des Stators ist und $f_M$ die Frequenz des lastseitigen Stromrichters ist. Falls $N_{PP}$=1 dreht der Motor mit der Frequenz $f_M$ des lastseitigen Stromrichters 62. Da jedoch auf jedem Phasenleiter 50, 51 neben der Wechselrichter-Frequenz $f_M$ auch weiter Frequenzen vorhanden sind, führen diese Frequenzen zu Überlagerungen. Diese weiteren Frequenzen führen zu magnetischen Feldern im Luftspalt des ersten beziehungsweise zweiten Motors 12, 14, welche nicht mit der Umdrehungsgeschwindigkeit rotieren und somit zu pulsierenden Momenten führen, welche auf den Rotor einwirken.

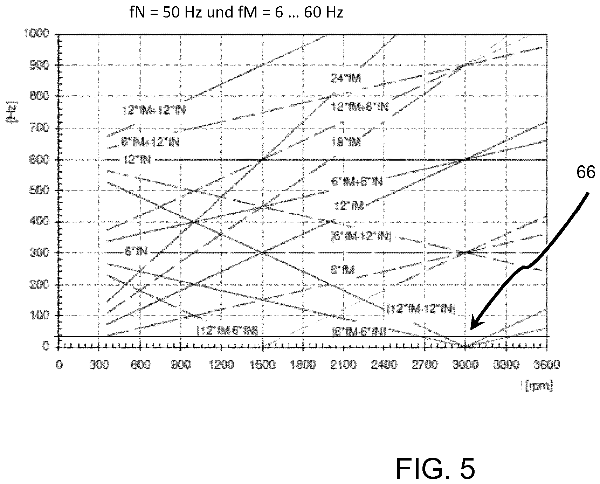

FIG. 5 zeigt ein typisches Campbell-Diagramm für den oben beschriebenen ersten Antrieb 32 wie auch für den zweiten Antrieb 34, welche je netzseitig wie auch lastseitig einen zwölfpulsigen Stromrichter 60, 62 aufweise. Die

Frequenz des Versorgungsnetzes wie auch des netzseitigen Stromrichters 60 ist in FIG. 5 bis 7 mit fN anstelle $f_N$ bezeichnet. Diese beträgt im vorliegenden Beispiel 50 Hz. Die Frequenz des lastseitigen Umrichters ist mit der variablen Umdrehungsgeschwindigkeit des jeweiligen Motors 12, 14, wie oben angegeben, gekoppelt und ist in FIG. 5 bis 7 mit fM anstelle $f_M$ bezeichnet. In FIG. 5 ist die Umdrehungsgeschwindigkeit in Umdrehungen pro Minute angegeben, wobei Umdrehungen pro Minute als rpm abgekürzt ist. Die in FIG. 5 durchgezogen gezeichneten Linien geben den Frequenzverlauf der ganzzahlig harmonischen, pulsierenden Momente des oben beschriebenen 12-Puls-Systms an. Die durchbrochenen Linien geben den Frequenzverlauf der nicht-ganzzahligen, pulsierenden Momente an. Im vorliegenden Campbell-Diagramm wurde für die Polpaarzahl der Motoren 1 angenommen. Folglich ist die Wechselrichter-Frequenz $f_M$ gleich der Motorfrequenz.

Im Campbell-Diagramm ist der Frequenzverlauf der pulsierenden Momente in Abhängigkeit der Umdrehungszahl rpm dargestellt. Diese können beispielsweise im Speicherzwischenkreis zwischen dem jeweiligen netzseitigen Stromrichter 60 und dem lastseitigen Stromrichter 62 gemessen werden und führen zu Momenten auf den jeweiligen Motor 12, 14, die nicht der Umdrehungsgeschwindigkeit des Motors entsprechen.

Weiter ist beispielshaft eine Frequenz 66 einer torsionalen Eigenschwingungen des Strangs 17 eingezeichnet. Die Frequenzen der ersten, zweiten und dritten Eigenschwingung können beispielsweise bei 6 Hz, 19 Hz und 56 Hz liegen, hängen jedoch von der Ausgestaltung des Strangs 17 ab. Die Frequenzen der torsionalen Eigenschwingungen sind unabhängig von der momentanen Umdrehungsgeschwindigkeit des Strangs 17.

Wie aus dem Campbell-Diagramm hervor geht, überschneiden sich die Frequenz 66 beziehungsweise der Frequenzverlauf der Eigenschwingung des Strangs 17 mit den Frequenzverläufen der pulsierenden Momente. Da die Frequenz $f_M$ des lastseitigen Umrichters 62 sich bei einer Drehzahländerung des Strangs 17 ändert, wird insbesondere beim Hochfahren des Strangs 17 aus dem Stillstand bis zur gewünschten Umdrehungsgeschwindigkeit ein gewisses Frequenzband durchlaufen, in welchem typischerweise Überschneidungen der Eigenfrequenz 66 des Strangs 17 mit den durch den Antrieb verursachten Pendelmomenten liegen. Da das Hochfahren relative schnell erfolgt wird der Strang 17 bei den Eigenfrequenzen des Strangs 17 typischerweise nicht stark angeregt. Jedoch führen typischerweise Überschneidungen des Frequenzverlaufs 66 der Eigenschwingung des Strangs 17 mit den Frequenzverläufen der pulsierenden Momente nahe der Umdrehungsgeschwindigkeit für den Dauerbetrieb zu unerwünschten Schwingungen des Strangs 17. Im vorliegenden, in FIG. 5 gezeigten Diagramm, ist dies nahe der Umdrehungsgeschwindigkeit von 3000 rpm der Fall.

Wie beispielhaft in FIG. 1 gezeigt, weist das erfindungsgemässe System einen ersten Motor 12 und einem zweiten Motor 14 auf. Die Motoren 12, 14 sind über einen gemeinsamen Strang 17 miteinander mechanisch gekoppelt. Der erste Motor 12 sowie der zweite Motor 14 sind dazu gestimmt sind, den Strang 17 anzutreiben, wobei der Strang 17 eine torsionale Eigenfrequenz hat, wobei auf den Strang 17 durch den ersten Motor 12 ein von der Umdrehungsgeschwindigkeit abhängiges, erstes Pendelmoment und durch den zweiten Motor ein ebenfalls von der Umdrehungsgeschwindigkeit abhängiges, zweites Pendelmoment einwirkt. Erfindungsgemäss ist der zweite Motor 14 derart bezüglich des ersten Motors 12 angeordnet, dass bei einer gegebenen Umdrehungsgeschwindigkeit des Strangs 17 die Einwirkung des ersten Pendelmoments und des zweiten Pendelmoments zu einer Auslöschung der Eigenfrequenz auf dem Strang 17 führt.

Die Auslöschung der Anregung des Strangs 17 bei einer bestimmten Frequenz kann wie folgt erfolgen, wobei im Folgenden der zweite Antrieb 34 ohne elektrische Phasenverschiebung $\Delta ph_N$ zum ersten Antrieb 32 betrieben wird, das heisst, dass die Spannungen und/oder die Ströme in den Phasenleitern 46, 47 zwischen dem ersten Transformator 40 und dem netzseitigen Stromrichter 60 des ersten Umrichters 48 sowie zwischen dem zweiten Transformator 41 und dem netzseitigen Stromrichter 60 des zweiten Umrichters 49 in Phase zueinander sind. Der Phasenverschiebungswinkel $\Delta ph_N$ ist folglich Null. Weiter wird eine Fallunterscheidung von geradzahligen und ungeradzahligen Schwingung zur Eigenfrequenz gemacht.

Bei geradzahliger Schwingung des mechanischen Systems schwingen die beiden Endbereiche des Systems synchron zueinander. Die Schwingung kann folglich ausgelöscht werden, indem beide Enden des Systems gegengleich angeregt werden. Dies kann wie folgt erzielt werden:

- Der zweite Rotor 22 wird um 180° gegenüber dem ersten Rotor 20 verdreht, wobei der erste Stator 24 und der zweite Stator 26 radial aufeinander ausgerichtet sind, wobei folglich $\varphi_R = 180°$, $\varphi_{St} = 0°$ und $\Delta ph_M = \varphi_R = 180°$ gilt; oder

- Der zweite Stator 26 wird um 180° gegenüber dem ersten Stator 24 verdreht, wobei der erste Roter 20 und der zweite Rotor 22 radial aufeinander ausgerichtet sind wobei folglich $\varphi_R = 0°$, $\varphi_{St} = 180°$ und und $\Delta ph_M = \varphi_{St} = -180°$, wobei -180° äquivalent zu +180° ist; oder

- Der der zweite Stator 26 um einen Winkel $\varphi_{St}$ gegenüber dem ersten Stator 24 verdreht angeordnet ist und der zweite Rotor um einen Winkel $\varphi_R$ gegenüber dem ersten Rotor angeordnet ist, wobei für die Winkel das folgende gilt: $\Delta ph_M = \varphi_R - \varphi_{St} = 180°$.

Es ist dabei zu berücksichtigen, dass die Position "180°" äquivalent zu "-180°" ist, da dies dieselbe Position ist. Ebenso sind ganzzahlige vielfache von 360° addiert zu 180° äquivalente Positionen.

Falls die Polpaarzahl $N_{PP}$ verschieden von 1 ist, kommen weitere äquivalente Winkelpositionen hinzu. Für $N_{PP}$ =2 sind dies 90° und 270°, für $N_{PP}$ =3 zusätzlich 45°, 135°, 225° und 315°. Für höhere Polpaarzahlen entsprechend weitere Winkelpositionen

Bei ungeradzahligen harmonischen Schwingungen des mechanischen Systems schwingen die beiden Endbereiche des Systems entgegengesetzt zueinander. Die Schwingung kann folglich ausgelöscht werden, indem beide Enden des Systems synchron angeregt werden. Dies kann auf folgende wie folgt erzielt werden:

- Der zweite Stator 26 ist radial auf den ersten Stator 24 ausgerichtet und der erste Roter 20 und der zweite Rotor sind ebenfalls radial aufeinander ausgerichtet, wobei folglich $\varphi_R$ =0°, $\varphi_{St}$ =0° und $\Delta ph_M$=0° ist; oder
- Der der zweite Stator 26 ist um einen Winkel $\varphi_{St}$ gegenüber dem ersten Stator 24 verdreht angeordnet und der zweite Rotor ist um einen Winkel $\varphi_R$ gegenüber dem ersten Rotor angeordnet, wobei für die Winkel das folgende gilt: $\Delta ph_M = \varphi_R - \varphi_{St}$ =0°

Es ist dabei zu berücksichtigen, dass die Position "0°" äquivalent zu ganzzahligen Vielfachen von 360° ist.

Falls die Polpaarzahl $N_{PP}$ verschieden von 1 ist, kommen weitere äquivalente Winkelpositionen hinzu. Für $N_{PP}$ =2 sind dies 180°, für $N_{PP}$ =3 zusätzlich 90° und 270°. Für höhere Polpaarzahlen entsprechend weitere Winkelpositionen..

Es kann jedoch auch wünschenswert sein, die beiden Antriebe 32, 34 auf Seite des Versorgungsnetzes 42 phasenverschoben zueinander zu betreiben, um die von den Antrieben 32, 34 verursachte Störung des Versorgungsnetzes 42 zu reduzieren. Im Fall eines 12-Puls-Systems wird typischerweise der netzseitige Stromrichter 60 des zweiten Umrichters 49 mit einer Phasenverschiebung von $\Delta ph_N$ =15° bezüglich des netzseitigen Stromrichters 60 des ersten Umrichters 48 betrieben. Diese Phasenverschiebung kann durch den zweiten Transformator 41 erzielt werden. Falls die Phasenverschiebung $\Delta ph_N$ von 0° verschieden ist, muss diese zum Auslöschen der anregenden Pendelmomente berücksichtigt werden.

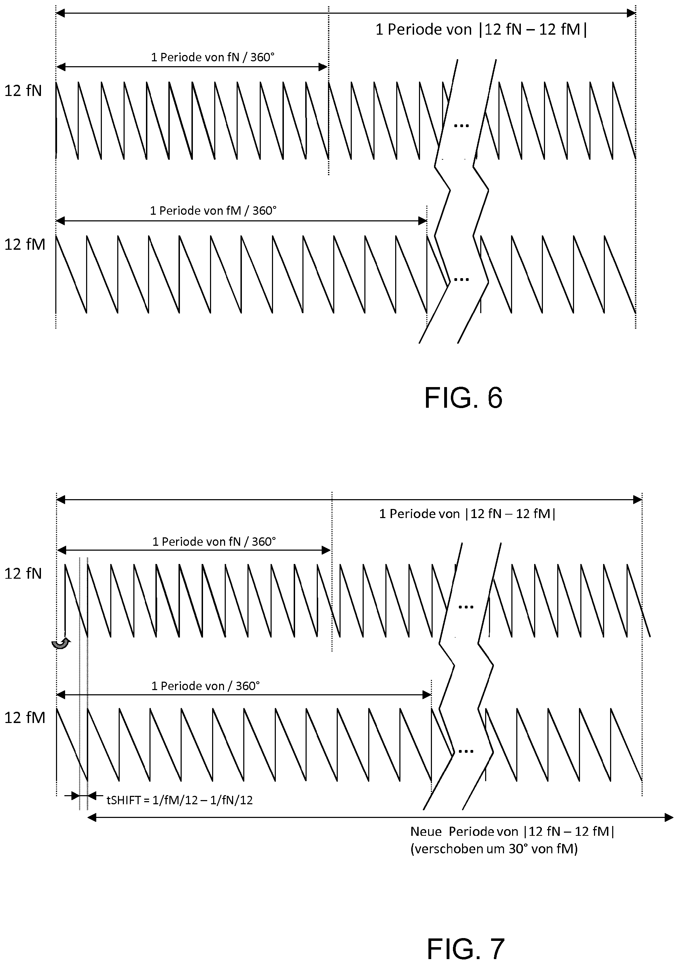

FIG. 6 zeigt oben rein schematisch die Gleichspannungsseite des netzseitigen 12-Puls Stromrichter 60 des ersten Umrichters 48, welche mit dem 12-fachen der Netzfrequenz $f_N$ schwingt. Zur Vereinfachung der Darstellung wurde eine Sägezahnfunktion gewählt. Weiter zeigt FIG. 6 unten die Gleichspannungsseite des lastseitigen Stromrichters 62 des ersten Umrichters, welche mit der 12-fachen Frequenz des lastseitigen Stromrichters 62 gepulst ist. Wiederum wird die Spannung rein schematisch als Sägezahnfunktion dargestellt. Zwischen der geplusten Gleichspannung des netzseitigen Stromrichters 60 und der gepulsten Gelichspannung des lastseitigen Stromrichters 62 entsteht eine tief-frequente Schwebung, welche als tief-frequenter Energietransfer im ersten Umrichter 48sichtbar ist. Weiter führt diese Schwebung der Spannung im Speicherzwischenkreis 64 des ersten Umrichters 48 zu einem tief-frequenten, im Allgemeinen nicht-ganzzahligen Drehmoment im Luftspalt des ersten Motors 12, welches mit der Frequenz der tief-frequenten Schwebung schwingt. Analoges gilt prinzipiell für den zweiten Umrichter 49 wie auch den zweiten Motor 24. Dies ist im Campell-Diagramm in FIG. 5 gezeigt.

Im Vergleich mit FIG 6 zeigt FIG. 7 die Situation für den zweiten Umrichter 49. Wiederum ist die gepluste Gleichspannung des netzseitigen Stromrichters 60 und die gepulste Gleichspannung des lastseitigen Stromrichters 62 gezeigt, jedoch ist die Spannung auf der Seite des Versorgungsnetzes 42 phasenverschobenen zur Netzfrequenz $f_N$. Die Phasenverschiebung beträgt $\Delta ph_N$.. Wie oben beschrieben, kann diese Phasenverschiebung durch einen Transformator erzielt werden. Analog zur obigen Beschreibung des ersten Umrichters resultiert wiederum eine tief-frequente Schwebung im Speicherzwischenkreis 64 des zweiten Umrichters 49 und ein tief-frequentes, im Allgemeinen nicht-ganzzahligen Drehmoment im Luftspalt des zweiten Motors 14.

Wie aus FIG. 6 und FIG. 7 hergeleitet werden kann, führt die Phasenverschiebung $\Delta ph_N$ der Frequenz des netzseitigen Stromrichters 60 des zweiten Umrichters 49 zu einer Phasenverschiebung der tief-frequenten Schwebung im Energiefluss durch den zweiten Umrichter 49 gegenüber der tief-frequenten Schwebung im ersten Umrichter 48 und damit auch des tief-frequenten, pulsierenden Luftspaltmoments des zweiten Motors 14 im Vergleich zum tief-frequenten, pulsierenden Luftspaltmoments des ersten Motors 12. Durch Vergleichen von FIG.6 mit FIG. 7 kann diese Verschiebung aus der Frequenz $f_N$ des netzseitigen Stromrichters 60, der Phasenverschiebung um den Phasenverschiebungswinkel $\Delta ph_N$ und aus der Frequenz $f_M$ des lastseitigen Stromrichters 62 hergeleitet werden und gehorcht allgemein dem fol-genden Gesetz:

$$\Delta ph_M = \frac{\Delta ph_N}{360 \deg} \frac{1}{f_N} \frac{N_N}{1/f_M - 1/f_N} (360° / N_M)$$

wobei $N_N$ die Anzahl Pulse des netzseitigen Stromrichters und $N_M$ die Anszahl Pulse des lastseitigen Stromrichters ist. Falls die die Anzahl Pulse des netzseitigen und des lastseitigen Stromrichters gleich ist, gilt:

$$\Delta ph_M = \Delta ph_N \frac{1}{f_N} \frac{1}{1/f_M - 1/f_N}.$$

Die zwei obenstehenden Formeln für $\Delta ph_M$ gelten allgemein für Synchronmaschinen.

Für mindestens eine kritische Drehzahl, bei der die Schwebungsfrequenz mit einer Eigenfrequenz der torsionalen Eigenschwingung des Strangs 17 zusammenfallen würde, kann nun mit Hilfe des erfindungsgemässen Systems eine Auslöschung der torsionalen Eigenschwingung auf der Last erfolgen.

Für eine korrekte Vorverdrehung des zweiten Rotors 22 gegenüber dem ersten Rotor 20 muss der relative Motorwinkel $\Delta ph_M = \varphi_R - \varphi_{St}$ gemäss der obigen Formel auf 180 ° für geradzahlige und auf 0° für ungeradzahlige harmonische Schwingungen der Last 17 gebracht werden. Wiederum sind ganzzahlige Vielfache von 360° addiert zu 0° bzw. 180° äquivalent zu 0° bzw. 180°. Für Maschinen mit höherer Polpaarzahl $N_{PP}$ gilt analog der Wert 180°/$N_{PP}$, resp, 360°/$N_{PP}$.

Im vorliegenden Ausführungsbeispiel ist die Last 17' ein auf der Welle 16 angeordnetes Kompressorsystem. Diese Last 17' hat erste torsionale Eigenschwingung bei der Eigenfrequenz von 6.48 Hz. Die Last 17' ist angetrieben von zwei fremdgeführten Umrichtern 48, 49. Die Umrichter 48, 49 sind an ein Versorgungsnetz mit einer Netzfrequenz von 60 Hz über je einen Transformator 40, 41 angeschlossen. Die Nennfrequenz des ersten wie auch zweiten Motors 12, 14 ist ebenfalls 60 Hz.

Bei einer Umdrehungsgeschweindigkeit von 3567.6rpm, welche 99.1 % der Nenngeschwindigkeit beziehungsweise der Nennfrequenz der Motoren entspricht, regt das Faltungsprodukt der zwölffachen Netzfrequenz $f_N$ mit der zwölffachen Motorfrequenz $f_M$ die erste harmonische Schwingung an. Das genannte Faltungsprodukt wird in FIG. 5 durch | 12fM - 12fN | dargestellt (in FIG. 5 ist $f_N$ als fN und $f_M$ als fM bezeichnet).

Erfindungsgemäss wird die Anregung der Last 17 durch die Pendelmomente dadurch verhindert respektive gedämpft, dass sich die Anregungen durch den ersten Motor 12 und durch den zweiten Motor 14 sich gegenseitig auslöschen beziehungsweise sich zumindest dämpfen. Dies wird für die torsionale erste harmonische Schwingung dadurch erreicht, dass die beiden durch die Faltung verursachten Pendelmomente synchron bzw. in Phase auf die Last einwirken.

Falls wegen der Netzrückwirkung des Antriebssystems 30 der zweite Antrieb 34 auf der Seite des Versorgungsnetzes 42 mit einer Phasenverschiebung $\Delta ph_N$ von 15° bezüglich des ersten Antriebs 32 betrieben wird, folgt aus der obigen Formel, dass der relative Motorwinkel $\Delta ph_M$ zwischen dem zweiten Rotor 22 und dem zweiten Stator 26 1651.67° beziehungsweise 211.67° sein soll. Falls der zweite Stator 26 gegenüber dem ersten Stator 24 radial ausgerichtet ist und somit $\varphi_{St}$=0° gilt, folgt, dass der zweite Rotor 22 gegenüber dem ersten Rotor 24 um 211.67° radial verdreht anzuordnen ist. Mit dieser Anordnung des mechanischen Systems können die Pendelmomente, welche auf die Last einwirken optimal auszulöschen werden. Falls der Winkel $\Delta ph_M$ nicht genau realisiert werden kann, ist dennoch eine gute Auslöschung der Pendelmomente realisierbar.

Allgemein gilt, dass durch die obige Formel zum Berechnen von $\Delta ph_M$ die optimale Phasenverschiebung des relativen Motorwinkels berechnet werden kann. Abweichungen von diesem Winkel sind möglich und führen ebenfalls zumindest teilweise zu einer Auslöschung beziehungsweise Reduzierung der Anregung der Eigenschwingung durch die Pendelmomente. Insbesondere sind Abweichungen vom relativen Motorwinkel $\Delta ph_M$ von bis zu +/- 10° zulässig.

In weiteren Ausführungsformen kann der netzseitige Stromrichter 60 und / oder der lastseitige Stromrichter 62 des ersten Umrichters 48 und / oder des zweiten Umrichters 49 als selbstgeführter Umrichter ausgebildet sein.

Anstelle von nur einschaltbaren Thyristoren können beispielsweise abschaltbare Thyristoren wie zum Beispiel ein gate-turn-off (GTO) Thyristor oder ein IGC-Thyristor (IGCT) oder ein symmetrischer GCT (SGCT oder symmetric GCT) verwendet werden.

Prinzipiell kann auch eine Asynchronmaschine mit einem geeigneten Umrichter mit Stromzwischenkreis genutzt werden.

**Bezugszeichenliste**

| | |
|---|---|
| 10 | mechanisches System |
| 12 | erster Motor; erster Elektromotor |
| 14 | zweiter Motor; zweiter Elektromotor |
| 16 | Welle |
| 17 | Strang |
| 17' | Last, Kompressorsystem |
| 20 | erster Rotor |

| 22 | zweiter Rotor |
| 24 | erster Stator |
| 26 | zweiter Stator |
| 30 | Antriebssystem |
| 32 | erster Antrieb |
| 34 | zweiter Antrieb |
| 40 | erster Transformator |
| 41 | zweiter Transformator |
| 42 | Versorgungsnetz |
| 44 | Phasenleiter |
| 46 | Phasenleiter |
| 48 | erster Umrichter |
| 49 | zweiter Umrichter |
| 50 | Phasenleiter |
| 51 | Phasenleiter |
| 60 | netzseitiger Stromrichter |
| 62 | lastseitiger Stromrichter |
| 64 | Speicherzwischenkreis |
| 66 | Eigenfrequenz der Welle |
| A | Längsachse |
| $N_{VN}$ | Anzahl Phasenleiter des Versorgungsnetzes |
| $N_{UM}$ | Anzahl Phasenleiter zwischen 40 und 48 |
| $N_{AN}$ | Anzahl Phasenleiter zwischen 48 und 12 |
| $N_{PP}$ | Anzahl Polpaare |
| $\varphi_{St}$ | Statorwinkel |
| $\varphi_R$ | Rotorwinkel |
| $\Delta ph_M$ | relativer Motorwinkelf$_{DC}$ Grundfrequenz von $V_{DC}$ |
| $\Delta ph_N$ | Phasenverschiebungswinkel |
| $f_{Mot}$ | Motorfrequenz |
| rpm | Anzahl Umdrehungen pro Minute |
| fM | Frequenz des lastseitigen Stromrichters |
| fN | Frequenz des netzseitigen Stromrichters |
| $N_N$ | Anzahl Pulse des netzseitigen Stromrichters |
| $N_M$ | Anzahl Pulse des lastseitigen Stromrichters |

**Patentansprüche**

1. System mit einem ersten Elektromotor (12) und einem zweiten Elektromotor (14), welche über einen gemeinsamen Strang (17) des Systems miteinander mechanisch gekoppelt sind, wobei der Strang (17) eine torsionale Eigenschwingung zu einer Eigenfrequenz hat, wobei durch den erste Elektromotor (12) ein erstes Pendelmoment auf den Strang (17) einwirkt und durch den zweiten Elektromotor (14) ein zweites Pendelmoment auf den Strang (17) einwirkt und wobei der erste Elektromotor (12) wie auch der zweite Elektromotor (14) an jeweils gegenüberliegenden Endbereichen des Strangs (17) angeordnet sind, wobei der erste Elektromotor (12) und der zweite Elektromotor (14) eine Synchronmaschine ist, wobei der erste Elektromotor (12) durch einen ersten Antrieb (32) des Systems und der zweite Elektromotor (14) durch einen zweiten Antrieb (34) des Systems angetrieben wird, wobei der erste Antrieb (32) und der zweite Antrieb (34) über Phasenleiter mit einem Versorgungsnetz (42) verbunden sind, und wobei der erste Antrieb (32) einen ersten Umrichter (48) und der zweite Antrieb (34) einen zweiten Umrichter (49) aufweist,

   **dadurch gekennzeichnet, dass**

   der zweite Elektromotor (14) um einen relativen Motorwinkel $\Delta ph_M$ radial verdreht gegenüber dem ersten Elektromotor (12) angeordnet ist, wobei der relative Motorwinkel von einem netzseitigen, elektrischen Phasenverschiebungswinkel $\Delta ph_N$ zwischen dem ersten Umrichter (48) und dem zweiten Umrichter (49) abhängt, so dass die Einwirkung des zweiten Pendelmoments auf den Strang (17) zu einer Dämpfung der Anregung der Eigenschwingung durch das erste Pendelmoment führt, wobei der relative Motorwinkel $\Delta ph_M = \varphi_R - \varphi_{St}$ eine Differenz zwischen einem Rotorwinkel $\varphi_R$, um den der zweite Rotor (22) radial verdreht gegenüber dem ersten Rotor (20) angeordnet ist, und einem Statorwinkel $\varphi_{St}$ ist, um den der zweite Stator (26) radial verdreht gegenüber dem ersten Stator (24) angeordnet ist.

**2.** System gemäss Anspruch 1, **dadurch gekennzeichnet, dass** der erste Antrieb (32) wie auch der zweite Antrieb (34) als Stromzwischenkreisumrichter ausgebildet sind.

**3.** System nach einem der Ansprüche 1 bis 2, **dadurch gekennzeichnet, dass** der erste Umrichter (48) und der zweite Umrichter (49) auf der Seite des Versorgungsnetzes (42) und auf der Seite des ersten Elektromotors (12) beziehungsweise des zweiten Elektromotors (14) jeweils als fremdgeführter Stromrichter ausgeführt ist.

**4.** System nach einem der Ansprüche 1 bis 3, **dadurch gekennzeichnet, dass** der zweite Antrieb einen zweiten Transformator (41) aufweist, mittels welchem die Phasenverschiebung um den Phasenverschiebungswinkel $\Delta ph_N$ realisiert ist.

**5.** System nach einem der Ansprüche 1 bis 4, **dadurch gekennzeichnet, dass** der erste Umrichter (48) und der zweite Umrichter (49) jeweils auf der Seite des Versorgungsnetzes (42) als auch auf der Seite des ersten Elektromotors (12) beziehungsweise des zweiten Elektromotors (14) als 12-Puls-Stromrichter ausgeführt ist.

**6.** System nach Anspruch 5, **dadurch gekennzeichnet, dass** jeweils ein netzseitiger Stromrichter (60) des ersten Umrichters (48) und des zweiten Umrichters (49) als phasenanschnittgesteuerter, fremdkommutierter Thyristorstromrichter ausgeführt ist.

**7.** System nach Anspruch 5 oder 6, **dadurch gekennzeichnet, dass** jeweils ein lastseitiger Stromrichter (61) des ersten Umrichters (48) und des zweiten Umrichters (49) als phasenanschnittgesteuerter, fremdkommutierter Thyristorstromrichter ausgeführt ist.

**8.** System nach einem der Ansprüche 1 bis 7, **dadurch gekennzeichnet, dass** der relative Motorwinkel zumindest näherungsweise

$$\Delta ph_M = \frac{\Delta ph_N}{360\deg} \frac{1}{f_N} \frac{N_N}{1/f_M - 1/f_N} (360°/N_M)$$

ist, wobei $f_N$ die Frequenz des Versorgungsnetzes (42), $f_M$ die Frequenz des lastseitigen Stromrichters (62), $N_N$ die Pulszahl des netzseitigen Stromrichters (60), $N_M$ die Pulszahl des lastseitigen Stromrichters (62) ist.

**9.** System nach einem der Ansprüche 1 bis 8, **dadurch gekennzeichnet, dass** der Strang (17) eine Last (17') aufweist, welche bevorzugt ein Kompressorsystem ist.

**10.** System nach einem der Ansprüche 1 bis 9, **dadurch gekennzeichnet, dass** der erste Elektromotor (12) und der zweite Elektromotor (14) zusammen mindestens eine Leistung von 60 MW haben.

**11.** System nach einem der Ansprüche 1 bis 10, **dadurch gekennzeichnet, dass** der zweite Rotor (22) nicht auf den ersten Rotor (20) radial ausgerichtet ist, so dass der Statorwinkel $\varphi_{St}$, um den der zweite Stator (26) radial verdreht gegenüber dem ersten Stator (24) angeordnet ist, von Null verschieden ist, und/oder der zweite Stator (26) nicht auf den ersten Stator (24) radial ausgerichtet ist, so dass der Rotorwinkel $\varphi_R$, um den der zweite Rotor (22) radial verdreht gegenüber dem ersten Rotor (20) angeordnet ist, von Null verschieden ist.

**Claims**

**1.** System comprising a first electric motor (12) and a second electric motor (14), which are coupled mechanically to one another via a common string (17) of the system, wherein the string (17) has a torsional natural oscillation at a natural frequency, wherein a first oscillating torque acts on the string (17) by means of the first electric motor (12) and a second oscillating torque acts on the string (17) by means of the second electric motor (14), and wherein the first electric motor (12) and the second electric motor (14) are arranged on respectively opposite end regions of the string (17), wherein the first electric motor (12) and the second electric motor (14) is a synchronous machine, wherein the first electric motor (12) is driven by a first drive (32) of the system, and the second electric motor (14) is driven by a second drive (34) of the system, wherein the first drive (32) and the second drive (34) are connected to a supply grid (42) via phase conductors, and wherein the first drive (32) has a first converter (48) and the second drive (34) has a second converter (49), **characterized in that**

the second electric motor (14) is arranged so as to be radially rotated through a relative motor angle $\Delta ph_M$ with respect to the first electric motor (12), wherein the relative motor angle depends on a grid-side electrical phase shift angle $\Delta ph_N$ between the first converter (48) and the second converter (49) in such a way that the effect of the second oscillating torque on the string (17) results in damping of the excitation of the natural oscillation by the first oscillating torque, wherein the relative motor angle $\Delta ph_M = \varphi_R - \varphi_{St}$ is a difference between a rotor angle $\varphi_R$, through which the second rotor (22) is arranged so as to be radially rotated with respect to the first rotor (20), and a stator angle $\varphi_{St}$, through which the second stator (26) is arranged so as to be radially rotated with respect to the first stator (24).

2. System according to claim 1, **characterized in that** the first drive (32) and the second drive (34) are current-source DC-link converters.

3. System according to one of claims 1 to 2, **characterized in that** the first converter (48) and the second converter (49) are each externally commutated power converters on the side of the supply grid (42) and on the side of the first electric motor (12) or the second electric motor (14) .

4. System according to one of claims 1 to 3, **characterized in that** the second drive has a second transformer (41), by means of which the phase shift through the phase shift angle $\Delta ph_N$ is realized.

5. System according to one of claims 1 to 4, **characterized in that** the first converter (48) and the second converter (49) are each twelve-pulse power converters on the side of the supply grid (42) and on the side of the first electric motor (12) or the second electric motor (14).

6. System according to claim 5, **characterized in that** in each case a grid-side power converter (60) of the first converter (48) and of the second converter (49) is an externally commutated thyristor power converter with phase angle control.

7. System according to claim 5 or 6, **characterized in that** in each case a load-side power converter (61) of the first converter (48) and of the second converter (49) is an externally commutated thyristor power converter with phase angle control.

8. System according to one of claims 1 to 7, **characterized in that** the relative motor angle is at least approximately

$$\Delta ph_M = \frac{\Delta ph_N}{360 \deg} \frac{1}{f_N} \frac{N_N}{1/f_M - 1/f_N} (360° / N_M),$$

where $f_N$ is the frequency of the supply grid (42), $f_M$ is the frequency of the load-side power converter (62), $N_N$ is the pulse number of the grid-side power converter (60), $N_M$ is the pulse number of the load-side power converter (62).

9. System according to one of claims 1 to 8, **characterized in that** the string (17) has a load (17'), which is preferably a compressor system.

10. System according to one of claims 1 to 9, **characterized in that** the first electric motor (12) and the second electric motor (14) together have at least a power of 60 MW.

11. System according to one of claims 1 to 10, **characterized in that** the second rotor (22) is not radially aligned with the first rotor (20), with the result that the stator angle $\varphi_{St}$, through which the second stator (26) is arranged so as to be radially rotated with respect to the first stator (24) is different from zero, and/or the second stator (26) is not radially aligned with the first stator (24), with the result that the rotor angle $\varphi_R$, through which the second rotor (22) is arranged so as to be radially rotated with respect to the first rotor (20) is different from zero.

**Revendications**

1. Système, comprenant un premier moteur électrique (12) et un deuxième moteur électrique (14) qui sont mécaniquement accouplés l'un à l'autre par un ensemble d'éléments rotatifs commun (17) du système, l'ensemble d'éléments rotatifs (17) présentant une oscillation de torsion propre pour une fréquence naturelle, dans lequel un premier moment pendulaire agit sur l'ensemble d'éléments rotatifs (17) par le premier moteur électrique (12), et un deuxième moment pendulaire agit sur l'ensemble d'éléments rotatifs (17) par le deuxième moteur électrique (14), et à la fois le premier moteur électrique (12) et le deuxième moteur électrique (14) étant disposés respectivement dans des zones d'extrémité de l'ensemble d'éléments rotatifs (17), le premier moteur électrique (12) et le deuxième moteur électrique (14) étant une machine synchrone, dans lequel le premier moteur électrique (12) est entraîné par un premier entraînement (32) du système, et le deuxième moteur électrique (14) est entraîné par un deuxième entraînement (34) du système, le premier entraînement (32) et le deuxième entraînement (34) étant reliés à un réseau d'alimentation (42) par des conducteurs de phase, et le premier entraînement (32) présentant un premier convertisseur (48) et le deuxième entraînement (34) présentant un deuxième convertisseur (49), **caractérisé en ce que** le deuxième moteur électrique (14) est disposé de manière radialement décalée d'un angle de moteur relatif $\Delta ph_M$ par rapport au premier moteur électrique (12), l'angle de moteur relatif dépendant d'un angle de déphasage électrique $\Delta ph_N$ côté réseau entre le premier convertisseur (48) et le deuxième convertisseur (49) de sorte que l'influence du deuxième moment pendulaire sur l'ensemble d'éléments rotatifs (17) conduit à un amortissement de l'excitation de l'oscillation propre par le premier moment pendulaire, l'angle de moteur relatif $\Delta ph_M = \varphi_R - \varphi_{St}$ étant une différence entre un angle de rotor $\varphi_R$, selon lequel le deuxième rotor (22) est disposé de manière radialement décalée en rotation par rapport au premier rotor (20), et un angle de stator $\varphi_{St}$ selon lequel le deuxième stator (26) est disposé de manière radialement décalée en rotation par rapport au premier stator (24).

2. Système selon la revendication 1, **caractérisé en ce que** le premier entraînement (32) ainsi que le deuxième entraînement (34) sont réalisés sous forme de convertisseurs indirects.

3. Système selon l'une quelconque des revendications 1 à 2, **caractérisé en ce que** le premier convertisseur (48) et le deuxième convertisseur (49) sont réalisés sous la forme de convertisseurs pilotés extérieurement, respectivement du côté du réseau d'alimentation (42) et du côté du premier moteur électrique (12) ou du deuxième moteur électrique (14).

4. Système selon l'une quelconque des revendications 1 à 3, **caractérisé en ce que** le deuxième entraînement présente un deuxième transformateur (41) au moyen duquel le déphasage selon l'angle de déphasage $\Delta ph_N$ est réalisé.

5. Système selon l'une quelconque des revendications 1 à 4, **caractérisé en ce que** le premier convertisseur (48) et le deuxième convertisseur (49) sont réalisés sous la forme de convertisseurs 12 impulsions, respectivement du côté du réseau d'alimentation (42) ainsi que du côté du premier moteur électrique (12) ou du deuxième moteur électrique (14).

6. Système selon la revendication 5, **caractérisé en ce que** respectivement un convertisseur côté réseau (60) du premier convertisseur (48) et du deuxième convertisseur (49) est réalisé sous la forme d'un convertisseur à thyristor, commuté extérieurement et commandé par redressement à l'entrée des phases.

7. Système selon la revendication 5 ou 6, **caractérisé en ce que** respectivement un convertisseur côté charge (61) du premier convertisseur (48) et du deuxième convertisseur (49) est réalisé sous la forme d'un convertisseur à thyristor, commuté extérieurement et commandé par redressement à l'entrée des phases.

8. Système selon l'une quelconque des revendications 1 à 7, **caractérisé en ce que** l'angle de moteur relatif est au moins approximativement égal à

$$\Delta ph_M = \frac{\Delta ph_N}{360 deg} \frac{1}{f_N} \frac{N_N}{1/f_M - 1/f_N} (360°/N_M)$$

où $f_N$ est la fréquence du réseau d'alimentation (42), $f_M$ est la fréquence du convertisseur côté charge (62), $N_N$ est le nombre d'impulsions du convertisseur côté réseau (60), et $N_M$ est le nombre d'impulsions du convertisseur côté charge (62).

9. Système selon l'une quelconque des revendications 1 à 8, **caractérisé en ce que** l'ensemble d'éléments rotatifs (17) présente une charge (17') qui est de préférence un système de compresseur.

10. Système selon l'une quelconque des revendications 1 à 9, **caractérisé en ce que** le premier moteur électrique (12) et le deuxième moteur électrique (14) présentent ensemble au moins une puissance de 60 MW.

**11.** Système selon l'une quelconque des revendications 1 à 10, **caractérisé en ce que** le deuxième rotor (22) n'est pas aligné radialement sur le premier rotor (20) de sorte que l'angle de stator $\varphi_{St}$, selon lequel le deuxième stator (26) est disposé de manière radialement décalée par rapport au premier stator (24), est différent de zéro, et/ou **en ce que** le deuxième stator (26) n'est pas aligné radialement sur le premier stator (24) de sorte que l'angle de rotor $\varphi_R$, selon lequel le deuxième rotor (22) est disposé de manière radialement décalée par rapport au premier rotor (20), est différent de zéro.

FIG. 1

**10**

FIG. 2

30

12    17    14

50, N$_{AN}$    SM    SM    51, N$_{AN}$

48    $\Delta ph_M$    49

46, N$_{UM}$    $\Delta ph_N$    47, N$_{UM}$

40    41

44, N$_{VN}$    45, N$_{VN}$

34

32    42    **FIG. 3**

60    64    62

$+V_{DC}/2$

46, N$_{UM}$=6    50, N$_{AN}$=6

44, N$_{VN}$=3    12

40    SM

$-V_{DC}/2$    **FIG. 4**

fN = 50 Hz und fM = 6 ... 60 Hz

FIG. 5

12 fN

1 Periode von fN / 360°

1 Periode von |12 fN − 12 fM|

...

12 fM

1 Periode von fM / 360°

...

# FIG. 6

12 fN

1 Periode von fN / 360°

1 Periode von |12 fN − 12 fM|

...

12 fM

1 Periode von / 360°

...

tSHIFT = 1/fM/12 − 1/fN/12

Neue Periode von |12 fN − 12 fM|
(verschoben um 30° von fM)

# FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100135825 A1
- EP 2099124 A2